(19) Europäisches Patentamt
European Patent Office
Office européen des brevets

(11) **EP 2 492 650 B1**

(12) **EUROPEAN PATENT SPECIFICATION**

(45) Date of publication and mention
of the grant of the patent:
**20.04.2016 Bulletin 2016/16**

(51) Int Cl.:
***B22D 2/00*** *(2006.01)* ***G01F 23/288*** *(2006.01)*

(21) Application number: **11001616.9**

(22) Date of filing: **28.02.2011**

(54) **Apparatus for detecting and displaying varying levels of a metal melt**

Vorrichtung zur Erkennung und Anzeige variierender Pegel einer Metallschmelze

Appareil de détection et d'affichage de variation des niveaux de fusion de métal

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.08.2012 Bulletin 2012/35**

(73) Proprietor: **SMS Concast AG
8027 Zürich (CH)**

(72) Inventors:
• **Michelon, Guido
34170 Gorizia (IT)**
• **Cestari, Luca
33030 Campoformido (IT)**
• **Sgrò, Antonio
33010 Reana del Roiale (IT)**
• **Dal Corso, Flavio
35027 Noventa Padovana (IT)**
• **Borsato, Enrico
31030 Dosson di Casier (IT)**

(74) Representative: **Mitola, Marco et al
Jacobacci & Partners S.p.A.
Via Berchet 9
35131 Padova (IT)**

(56) References cited:
**US-A- 2 764 890      US-A- 3 537 505
US-A1- 2004 128 098**

**Description**

The invention relates to an apparatus used for detecting and displaying varying levels of a metal melt, for example in a continuous casting mould, a tundish, an ingot or the like.

In a continuous casting process it is necessary to detect the level of a metal melt, for example in a corresponding mould as the quality of the cast metal strand is related i.a. to the constancy of the melt level in said mould.

There are numerous methods and corresponding hardware to establish the level of liquids that flow such as: Capacitance level sensors, ultrasonic methods, magnetorestrictive measurements, conductive level sensors. All of them have disadvantages when used to detect a melt level in a mould during continuous casting. One main problem is the high temperature of the metal melt (around 1500°C), another the reliability of these methods and hardware. For the purpose mentioned it is desired to determine the melt level with a certainty of at least +/- 3mm.

From EP 0 859223A1 it is known to detect the level of molten metal within a mould by measuring the extent to which gamma radiation emitted from an isotope source mounted on one side of the mould is attenuated by said molten metal within the mould. The corresponding apparatus comprises a source of radiation photons on one side and an array of radiation detectors on the opposite side of the mould as well as means for counting the number of incident photons received by each detector in unit time and providing therefrom a value for the height of the metal melt within the mould. Only detectors above the melt level receive a signal.

Although this method based on gamma rays has been used in the past there is still demand for increasing the preciseness and reproducibility of such measurement.

Therefore it is an object of the present invention to provide a method and/or an apparatus allowing to establish at least the level of a metal melt in a mould as part of a continuous casting process as precise and as reproducible as possible.

During intensive research work and tests it has become apparent that a decisive factor which limits the accuracy of known methods and apparatus is the existence of other components in the area of the metal melt surface, comprising, i.a. a lubricating powder (mould powder), which might be present in either a liquid, solid and/or mixed phase. Such materials, commonly called slag hereinafter, may cause varying and different attenuation of gamma radiation and thus influence the accuracy and reproducibility of corresponding measurements.

Although this problem is already mentioned in EP 0859223A1 it is not sufficiently solved by the known apparatus. The point-like radioactive source only allows those detectors to receive a signal which are arranged above the point source to steel level line. Further the sensitivity in the measurement equals to the linear length of the detector array and the uncertainty of the level measurement equals at least the length of the respective detectors. By a corresponding miniaturized dimensioning of the detectors this problem may be reduced but with the consequence of a corresponding larger amount of detectors in order to complete the necessary linear length, increasing the costs.

It was now found that the installation of at least one source of radiation, arranged on one side of the mould along a distinct length in a longitudinal direction may overcome these problems. It allows to detect not only the position of the metal column but also the presence and thickness of an associated slag layer. This increases the reliability and reproducibility of corresponding measurements characteristicly and allows to perform the continuous casting process with a much higher accuracy, improving the quality of the respective semi finished products such as billets, slabs etc.

Such elongated radiation source allows emitting radiation photons along a corresponding linear length instead of a punctual emittance towards the opposite side of the mould, provided with sensitive detectors along a second linear length in the longitudinal direction.

The longitudinal direction is defined as the direction of the metal flow, entering the mould, typically being vertical.

In its most general embodiment the invention relates to an apparatus simultaneously detecting and displaying varying levels of a metal melt and an associated slag layer in a continuous casting mould, according to claim 1.

Termini (endpoints) of said first and second distinct length are arranged above and below an estimated maximum and minimum level to be detected.

The linear extending radioactive source(s) allow(s) that all detector elements (i.a. crystals, which are sensitive to said radioactivity) at the receiving side (the receiving end) of the mould are able to detect a variable, individual signal, depending on the position of the respective melt (steel melt) and slag level.

The radiation source is a one piece source, shaped, for example, rod-like, or designed as a number of smaller radiation sources arranged one next to the other to form a corresponding column. The individual sources may even be "point-like" radiation sources but arranged in a corresponding number to form a row of certain length.

The photon flux between the source and each detector is attenuated by a factor

$$e^{-dx\,\mu x}$$

wherein $\mu x$ is the damping coefficient of the material through which the photons pass, with $\mu a$ for air, $\mu p$ for a specific powder and $\mu m$ for a certain metal melt and $dx$ is the thickness of the respective material. Due to the different physical properties of air, powder and melt $\mu a \neq \mu p \neq \mu m$.

As a result: Each detector (the detectors/scintillating means are arranged side by side along a certain length) will receive a different signal from the linear oriented radiation source, as far as these detectors are masked in a different way by the metal melt and/or slag in between. In other words: The inventive arrangement allows to vertically receive independent signals by each detector, depending on the position of each detector with respect to the metal melt and/or any powder/slag layer.

This will be further described in connection with the attached figures.

By comparison of the respective radiation data received by the various detectors and evaluation of these data by associated detector components such as semiconductors as well as a corresponding algorithm the exact level of the metal melt and the slag respectively may be extracted by a corresponding calibration (algorithm, software).

This is a consequence of the varying attenuation caused by the metal melt and the slag respectively. The melt and the slag cause different masking powers, related to their different density and composition. These are the only relevant variables in the system, since source type (for example Cobalt 60 or Caesium 137), wall thickness (including a water box surrounding the mould) and radiation path (between the source and each respective detector) are constant.

It is clear that corresponding measurements must be effected regularly to receive immediate information of any variation in the height of the respective levels during casting. Accordingly such measurements may be either made continuously or at short time intervals. According to one embodiment a clock rate between 10ms and 1 s is recommended. Further a reliable result is only achieved if the measurements at all detectors are made at the same time to avoid that different melt levels are compared by analyzing the detector data.

By comparing the signals of each detector at a defined time it is possible to extract so to say simultaneously and with high resolution the molten metal level and the thickness of any other material, deposited thereon (the "slag" thickness). The new arrangement allows a resolution of down to 3 or even down to 1mm.

According to the new apparatus the size (length) of each detector is no more directly related to the measurement data and its inaccuracy, thus making it possible to use reasonably sized detectors in a limited number, for example 3-15, alternatively minimum 4 or 5 and maximum 6,7, 8, or 10, although much more may be used (i.a. depending on their size to achieve the said linear extent)

This relatively small number of detectors and small crystal size allow to design a suitable, feasible and cheap integrated read-out electronic.

In a typical continuous casting system the melt and/or slag level may vary over a range of 100 to 300mm. This leads to linear lengths of both the radiation source and the row of detectors in a corresponding range, starting according to one embodiment of the invention, with 50mm, better 100mm and ending at about 400mm, typically between 100 and 250mm. The axial (longitudinal) length of the radiation source is longer or equals the axial length of the row of detectors.

Semi-conductor based photo means such as silicon photo multipliers (SiPM) or multipixel-photon-counters (MPPC) may be used in combination with the detectors and a corresponding read-out electronics to evaluate the signals/data from the detector crystals.. Especially the SiPM and MPPC are of a very small design and allow an installation extremely close to the mould itself or a mould cartridge. Insofar the distance between radiation source and detectors may be minimized and at the same time the radiation energy reduced without loss of accuracy in measurement. They read out the scintillating means and forward these data to the electronics (data processor).

This data processor (including a suitable algorithm) calculates the data/signals in a time-dependent manner and from this calculation the respective level of the metal melt and/or the associated slag layer derives, subject to the signals/data collected at a specific time.

It is within the scope of this invention to arrange more than one column (row) of detectors, for example two rows parallel and with a distance to each other, thus allowing to measure the fluctuations of both the liquid steel (metal melt) meniscus and of the slag layer. Both are typically not perfectly flat but undulated.

As already mentioned the source and/or the detectors may be arranged anywhere outside the passage area of the metal melt, including the metallic outer shell (mostly made of copper) of the mould, any water box surrounding the mould etc.

The source is typically installed in a shielding (for security reasons to avoid unintentional escape of radiation). The detectors (scintillation means/crystals) may be mounted inside and outside the water jacket mentioned.

Further features of the invention are described in the sub-claims and the other application documents, including the following description of a specific embodiment, disclosing schematically in

Fig. 1 an arrangement of an apparatus at a corresponding mould in a continuous casting process

Fig. 2a-2d: an exemplary situation of measurement

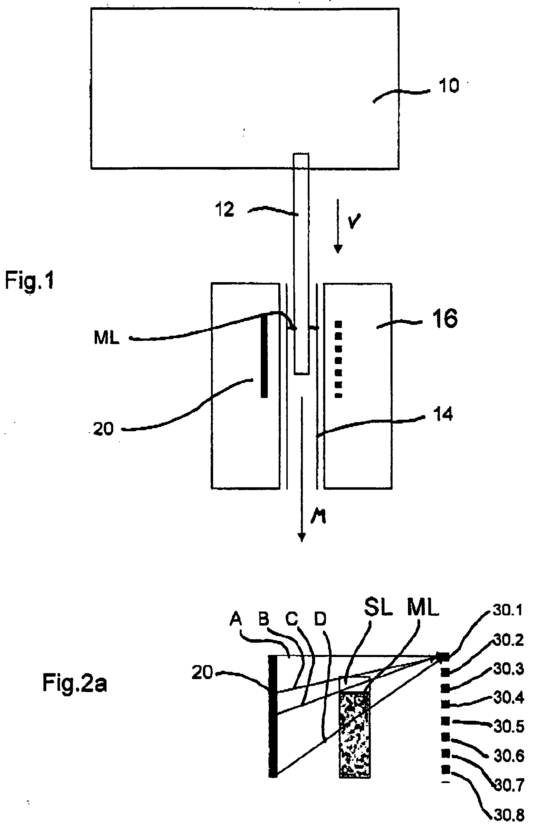

In Fig. 1 a tundisb is symbolized by 10, an associated nozzle by 12. The free lower end of nozzle 12 enters an open upper end of a mould 14. A lubricating powder is periodically given into the mould, forming a slag like cover onto the metal melt meniscus within mould 14. The mould 14 is arranged within a water cooled jacket 16. This all is common technology and not further described.

Within said water cooled jacket 16 a rod like, linearly extending radiation source 20, namely a Caesium 137 source of gamma radiation, is arranged in a vertical direction (arrow V; corresponding to the main flow direction (arrow M) of the melt from tundish 10 to mould 14 and further on) on one side of the mould 14. The axial length (in the longitudinal direction, see arrow V) is 200mm. Radiation is emitted all over the length of the rod. A casing for said source 20, to avoid radiation in any other direction than through the mould 14, is obligatory, but common and therefore not shown.

Eight detectors 30.1... 30.8 are arranged equidistant from the gamma emitting source 20 along a row, which row extends parallel (i.e. as well in a vertical direction) to rod shaped source 20 on an opposite side of mould 14. Each detector (crystal) 30.1...30.8 has a length (in direction V, i.e. in the longitudinal direction of said detector column) of 25 mm, thus summarizing up to a total length of said column of 200mm. Contrary to the schematic figure there is no space between adjacent detectors, but each detector is independent and may receive any signal independently. Termini (end points) T1, T2 of both source 20 and detector column 30.1...30.8 are arranged above the expected minimum and maximum level of melt and slag.

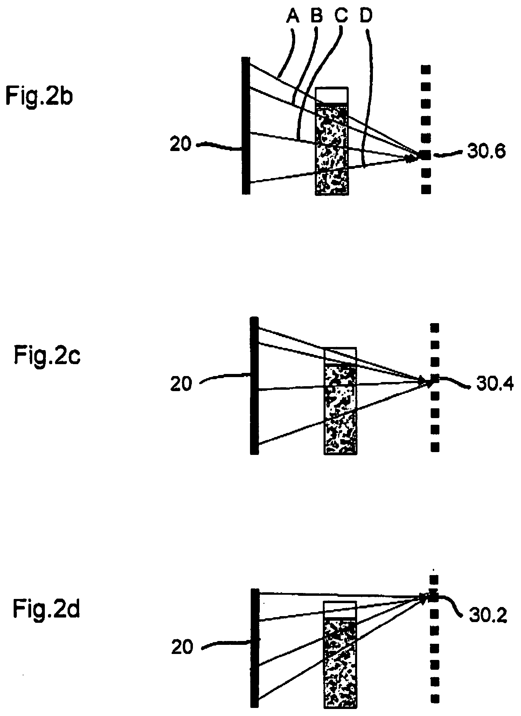

All figures 2a to 2d characterize one specific situation at one specific time during the casting process with a symbolized melt level ML and a slag level SL.

At this time the photon energy received by each of the eight detectors is measured and registered.

It may be seen by comparison of Fig. 2a to 2d that different detectors receive different signals, caused by different attenuation of the received gamma photons.

Referring to Fig. 2a line A symbolizes the way of photons from source 20 to detector 30.1 just passing the air, thereby being attenuated by factor $\mu_a$ The same is true with photons transported along line B. Those photons running along line C first pass air, then the slag layer and finally air again, thus the corresponding attenuation is caused by factors $\mu_a$ and $\mu_p$ according to their respective participation along the radiation way (distance between source and detector). Line D symbolizes the way of photons traversing air, melt and air.

As the attenuation factor of the melt $\mu_m$ is different from that of slag ($\mu_p$) and both different from $\mu_a$ (related to air) while further the respective lengths of air passage, melt passage and slag passage are different for photons transmitted along lines A, B, C and D the signals received from said photons which passed along said different ways from source 20 to detector 30.1 are different. At the end detector 30.1 receives a specific total signal according to the actual position of melt and slag (during measurement).

Corresponding measurements are done at each detector. Fig. 2b to 2d illustrate corresponding transition ways of the photons from source 20 to further detectors 30.6, 30.4 and 30.2.

Thus each detector 30.1 ... 30.8 receives a different total (summarized) signal. The more detectors are used the more data may be collected and the more reliable is the calculation of the exact position of the metal melt level ML and the slag level SL as finally calculated by a corresponding algorithm program in an associated data processing apparatus. It has been shown during tests that 3-8 detectors is a suitable number to achieve very good result with a precision of +/- 1-2mm to calculate the exact levels.

## Claims

1. Apparatus, simultaneously detecting and displaying varying levels of a metal melt and an associated slag layer in a continuous casting mould, having a longitudinal direction defined as the direction of the metal flow, entering the mould, comprising:

   - at least one source of radiation (20), arranged on one side of the mould (14) along a first distinct length in a longitudinal direction and emitting radiation photons towards an opposite side of the mould (14),
   - at least one series of sensitive detectors (30.1 ... 30.8), arranged one adjacent to the other along a second distinct length in said longitudinal direction on said opposite side of the mould (14), wherein there is no space between said adjacent detectors,
   - each detector (30.1 ... 30.8) being arranged so as to receive incident photons emitted all over the first length by said source of radiation (20),

   said detectors being arranged to form a row parallel to the longitudinal direction, each detector being independent and able to receive any signal independently,

   - a data processor, collecting the variable signals, received by each detector (30.1 ... 30.8), in a time-dependent manner and calculating with an algorithm and a calibration the respective level of the metal melt and the associated slag layer respectively, subject to the signals collected, at a specific time; and
   - means for evaluating and forwarding signals received from the detectors (30.1 ... 30.8) to the data processor

   wherein said source of radiation is linear extending and one piece source and allows that all detectors are able to detect a variable, individual signal, depending on the position of the respective melt and slag level, endpoints of said first and second distinct length being arranged above and below an estimated maximum and minimum level to be detected, the longitudinal length of the radiation source is longer or equal the longitudinal length of the row of detectors.

2. Apparatus according to claim 1 with 3 to 15 detectors (30.1 ... 30.8) being arranged along said second distinct length.

3. Apparatus according to claim 1 with a first distinct length of more than 5 cm and a second distinct length of more than 5 cm.

4. Apparatus according to claim 1 with a first distinct length of more than 10 cm and a second distinct length of more than 10 cm.

5. Apparatus according to claim 1 with each detector (30.1 ... 30.8) having a length, in the longitudinal direction, of 0,2 to 3 cm.

6. Apparatus according to claim 1 with each detector (30.1 ... 30.8) having a length, in the longitudinal direction, of 0,5 to 1,5 cm.

7. Apparatus according to claim 1, wherein the collecting of signals and the calculating of the respective levels of the metal melt and the associated slag layer are effected continuously.

8. Apparatus according to claim 1, wherein the collecting of signals and the calculating of the respective levels of the metal melt and the associated slag layer are effected in a cycling manner with a clock rate of 0,01 to 2 seconds.

**Patentansprüche**

1. Vorrichtung, welche variierende Niveaus einer Metallschmelze und einer assoziierten Schlackeschicht in einer Stranggussform gleichzeitig detektiert und anzeigt, welche eine Längsrichtung aufweist, welche als die Richtung des Metallflusses definiert ist, welcher in die Form eintritt, umfassend:

- wenigstens eine Strahlungsquelle (20), welche auf einer Seite der Form (14) entlang einer ersten getrennten Länge in einer Längsrichtung angeordnet ist und Strahlungsphotonen auf die gegenüber liegende Seite der Form (14) emittiert,
- wenigstens eine Serie von empfindlichen Detektoren (30.1 ... 30.8), welche einer benachbart zum anderen entlang einer zweiten getrennten Länge in der Längsrichtung auf der gegenüber liegenden Seite der Form (14) angeordnet sind, wobei kein Raum zwischen den benachbarten Detektoren vorhanden ist,
- jeder Detektor (30.1 ... 30.8) so angeordnet ist, dass er einfallende Photonen empfangen kann, welche über die gesamte erste Länge durch die Strahlungsquelle (20) emittiert wurden,

wobei die Detektoren so angeordnet sind, dass sie eine Reihe parallel zu der Längsrichtung bilden, wobei jeder Detektor unabhängig ist und jedes Signal unabhängig empfangen kann,

- einen Datenprozessor, welcher die variablen Signale, welche von jedem Detektor (30.1 ... 30.8) empfangen wurden, auf zeitabhängige Weise sammelt und das jeweilige Niveau der Metallschmelze bzw. der assoziierten Schlackeschicht mit einem Algorithmus und einer Kalibrierung gemäß den gesammelten Signalen zu einem spezifischen Zeitpunkt berechnet; und
- Mittel zur Auswertung und Weiterleitung von Signalen, welche von den Detektoren (30.1 ... 30.8) empfangen wurden, an den Datenprozessor,

wobei die Strahlungsquelle eine lineare Ausdehnung aufweist und eine einstückige Quelle ist und ermöglicht, dass alle Detektoren ein variables individuelles Signal abhängig von der Position des jeweiligen Schmelze- und Schlackeniveaus detektieren können, wobei die Endpunkte der ersten und zweiten getrennten Länge oberhalb und unterhalb eines geschätzten maximalen und minimalen Niveaus angeordnet sind, welches detektiert werden soll, wobei die Länge der Strahlungsquelle in Längsrichtung länger oder gleich ist wie die Länge der Detektorreihe in Längsrichtung.

2. Vorrichtung nach Anspruch 1 mit 3 bis 15 Detektoren (30.1 ... 30.8), welche entlang der zweiten getrennten Länge angeordnet sind.

3. Vorrichtung nach Anspruch 1 mit einer ersten getrennten Länge von mehr als 5 cm und einer zweiten getrennten Länge von mehr als 5 cm.

4. Vorrichtung nach Anspruch 1 mit einer ersten getrennten Länge von mehr als 10 cm und einer zweiten getrennten Länge von mehr als 10 cm.

5. Vorrichtung nach Anspruch 1, wobei jeder Detektor (30.1 ... 30.8) eine Länge in Längsrichtung von 0,2 bis 3 cm aufweist.

6. Vorrichtung nach Anspruch 1, wobei jeder Detektor (30.1 ... 30.8) eine Länge in Längsrichtung von 0,5 bis 1,5 cm aufweist.

**7.** Vorrichtung nach Anspruch 1, wobei die Sammlung von Signalen und die Berechnung der jeweiligen Niveaus der Metallschmelze und der assoziierten Schlackeschicht kontinuierlich durchgeführt wird.

**8.** Vorrichtung nach Anspruch 1, wobei die Sammlung von Signalen und die Berechnung der jeweiligen Niveaus der Metallschmelze und der assoziierten Schlackeschicht zyklisch mit einer Taktrate von 0,01 bis 2 Sekunden durchgeführt wird.

**Revendications**

**1.** Appareil pour détecter et afficher simultanément différents niveaux d'un métal en fusion et d'une couche de laitier associée dans un moule de coulée continue, ayant une direction longitudinale définie comme le sens d'écoulement du métal qui entre dans le moule et comprenant :

> - au moins une source de rayonnement (20) disposée sur un côté du moule (14) sur une première longueur distincte dans un sens longitudinal et émettant un rayonnement de photons vers un côté opposé du moule (14),
> - au moins une série de détecteurs sensibles (30.1 ... 30.8) disposés l' un à côté de l' autre sur une deuxième longueur distincte dans ledit sens longitudinal sur ledit côté opposé du moule (14), dans lequel il n'y a aucun espace entre lesdits détecteurs adjacents,
> - chaque détecteur (30.1 ... 30.8) étant disposé de façon à recevoir des photons incidents émis sur toute la première longueur par ladite source de rayonnement (20),

> lesdits détecteurs étant disposés de façon à former une rangée parallèlement au sens longitudinal, chaque détecteur étant indépendant et capable de recevoir un signal indépendamment,

> - un processeur de données qui recueille les signaux variables reçus par chaque détecteur (30.1 ... 30.8) en fonction du temps et calcule, à l'aide d'un algorithme et d'un étalonnage, le niveau respectif du métal en fusion et de la couche de laitier associée à un moment donné, en fonction des signaux recueillis, et
> - des moyens pour évaluer et transmettre au processeur de données les signaux reçus des détecteurs (30.1 ... 30.8), dans lequel ladite source de rayonnement est une source linéaire d'une seule pièce et permet que tous les détecteurs détectent un signal individuel variable en fonction de la position du niveau respectif de métal en fusion et de laitier, des points d'extrémité desdites première et deuxième longueurs distinctes étant disposés au-dessus et en dessous de niveaux maximum et minimum estimés à détecter et la longueur de la source de rayonnement dans le sens longitudinal étant supérieure ou égale à la longueur de la rangée de récepteurs dans le sens longitudinal.

**2.** Appareil selon la revendication 1 comportant entre 3 et 15 détecteurs (30.1 ... 30.8) disposés sur ladite deuxième longueur distincte.

**3.** Appareil selon la revendication 1, dans lequel la première longueur distincte est supérieure à 5 cm et la deuxième longueur distincte est supérieure à 5 cm.

**4.** Appareil selon la revendication 1, dans lequel la première longueur distincte est supérieure à 10 cm et la deuxième longueur distincte est supérieure à 10 cm.

**5.** Appareil selon la revendication 1, dans lequel chaque détecteur (30.1 ... 30.8) a une longueur dans le sens longitudinal de 0,2 à 3 cm.

**6.** Appareil selon la revendication 1, dans lequel chaque détecteur (30.1 ... 30.8) a une longueur dans le sens longitudinal de 0,5 à 1,5 cm.

**7.** Appareil selon la revendication 1, dans lequel l'acquisition des signaux et le calcul des niveaux respectifs du métal en fusion et de la couche de laitier associée sont effectués en continu.

**8.** Appareil selon la revendication 1, dans lequel l'acquisition des signaux et le calcul des niveaux respectifs du métal en fusion et de la couche de laitier associée sont effectués de manière cyclique avec une fréquence d'horloge de 0,01 à 2 secondes.

Fig.1

Fig.2a

A B C D

Fig.2b

20

30.6

Fig.2c

20

30.4

Fig.2d

20

30.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0859223 A1